Europäisches Patentamt

European Patent Office

Office européen des brevets

(11) Veröffentlichungsnummer: **0 084 291**
**B1**

(12) **EUROPÄISCHE PATENTSCHRIFT**

(45) Veröffentlichungstag der Patentschrift:
**12.03.86**

(21) Anmeldenummer: **82810531.2**

(22) Anmeldetag: **08.12.82**

�milnt. Cl.⁴: **A 22 C 11/08,** A 22 C 7/00,
**F 04 C 15/04**

(54) Portioniermaschine zum Füllen eines Formhohlraumes mit verformbarem Nahrungsmittel und Verwendung derselben.

(30) Priorität: **10.12.81 CH 7907/81**

(43) Veröffentlichungstag der Anmeldung:
**27.07.83 Patentblatt 83/30**

(45) Bekanntmachung des Hinweises auf die Patenterteilung:
**12.03.86 Patentblatt 86/11**

(84) Benannte Vertragsstaaten:
**AT BE CH DE FR GB IT LI LU NL SE**

(56) Entgegenhaltungen:
**FR - A - 1 182 935**
**FR - A - 1 422 912**
**FR - A - 1 547 556**
**GB - A - 1 056 529**
**US - A - 3 292 207**
**US - A - 3 742 556**
**US - A - 4 147 485**
**US - A - 4 212 609**

(73) Patentinhaber: **Hollymatic AG Ingenbohl,
Wylenstrasse 25, CH-6440 Brunnen (CH)**

(72) Erfinder: **Bollinger, Rudolf, Wylenstrasse 25,
CH-6440 Brunnen (CH)**

(74) Vertreter: **White, William et al,
PATENTANWALTS-BUREAU ISLER AG
Postfach 6940 Walchestrasse 23, CH-8023 Zürich (CH)**

ACTORUM AG

## Beschreibung

Die vorliegende Erfindung betrifft eine Portioniermaschine zum Füllen von Hohlräumen mit verformbarem Material gemäss dem Oberbegriff des unabhängigen Patentanspruchs 1, sowie eine Verwendung derselben gemäss dem Oberbegriff des unabhängigen Patentanspruchs 8.

Derartige Maschinen zur Herstellung von Pasteten aus gemahlenem Fleisch, Fisch oder dgl. sind bekannt. Nach der CH-A 506 252 weist eine Vorrichtung zum Formen von Gegenständen einen Behälter für die Aufnahme eines Vorrates von verformbarem Material, eine bewegliche Form in der Nähe des Behälters, die eine Formöffnung aufweist und mit jenem über einen Kanal verbunden ist, und ein Zuführorgan in Form einer Ramm in diesem Kanal auf. Die Ramm wird auf ihrem Weg gegen die Form angehalten, um einen bestimmten Druck im Material aufrechtzuerhalten, bis die Form von der Zuführöffnung wegbewegt wurde. Daraufhin kann die Ramm zurückbewegt werden, um einen nächsten Füllvorgang zu beginnen.

Infolge von Änderungen der Umweltbedingungen, insbesondere der Temperatur des Materials sowie dessen Beschaffenheit, kann der Druck im Material innerhalb weit auseinanderliegender Grenzen variieren, so dass im einen Fall zuviel Material in die Form gepresst wird und die Paste nach dem Entformen bläht, oder im andern Fall die Form nur teilweise gefüllt ist.

Gemäss der CH-A 506 332 wurde bei einer gleicherweise ausgebildeten Maschine ein Organ eingebaut, das in Abhängigkeit des Druckes des Materials in der Formausnehmung die Zuführbewegung der Ramm steuert. Somit wird die gewünschte Konsistenz des geformten Gegenstandes selbst herangezogen, derart, dass solcherart hergestellte Pasteten eine gleichmässige Dichte aufweisen, auch wenn sich die physikalischen Eigenschaften des Materials und/oder die Zuführgeschwindigkeit ändern sollten.

Sowohl bei diesen Vorrichtungen wie auch bei andern bekannten Maschinen wird ein hin- und herlaufender Kolben, eine sogenannte Ramm, benützt, um gemahlenes Fleisch durch einen Füllspalt in eine Form zu pressen. Es hat sich gezeigt, dass das im Fleisch vorhandene Gas, nämlich Luft, bei der Pressung eine Umschichtung des Fleisches bewirken kann, weil Muskelfleisch luftdurchlässiger ist als Fett, so dass eine Anreicherung von Fett auf einer Seite der Pastete festgestellt werden kann. Zudem wird das gemahlene Fleisch gegen eine Wand gepresst und es muss in eine andere Richtung ausweichen als die Richtung des Kraftvektors. Dadurch kann das Fleisch zerrissen werden und bekommt andere Genusseigenschaften als ursprünglich vorgesehen war.

Es ist eine Aufgabe der Erfindung, eine Portioniermaschine zu schaffen, die einerseits mit dem Druck im Material gesteuert wird, bei der jedoch die Nachteile der mit einer Ramm arbeitenden Maschinen vermieden sind. Ausserdem soll je nach dem Material, ob pastös oder stückartig, ein unterschiedlicher Fülldruck einstellbar sein.

Erfindungsgemäss wird dies durch die Merkmale im kennzeichnenden Teil des unabhängigen Patentanspruchs 1 erreicht. Die besondere Verwendung ist im unabhängigen Patentanspruch 8 gekennzeichnet.

Aus GB-A 1 056 529 ist eine Wurstfüllmaschine bekannt, bei der die Pressvorrichtung ein in einem angenähert kreiszylindrischen Gehäuse exzentrisch angeordneter Drehkolben ist. Der Drehkolben weist mehrere radialverschieblich gehaltene plattenförmige Schieber auf. Der Abgabekanal kann auch als Kompressionskammer bezeichnet werden. Der Drehkolben wird schrittweise weitergedreht, um das Material portionenweise in die Wursthaut einzufüllen. Damit ist diese Maschine ungeeignet zum Füllen von Formhohlräumen.

Ein Ausführungsbeispiel der Erfindung wird nachfolgend anhand der Zeichnung erläutert. Es zeigen:

Fig. 1 eine Schnittansicht einer Portioniermaschine für Material, das mit hohem Druck in die Form gepresst werden soll,

Fig. 2 dieselbe Schnittansicht wie Fig. 1, jedoch für Material, das mit niedrigem Druck in die Form gepresst werden soll,

Fig. 3 einen Seitenriss der Portioniermaschine nach Fig. 2, zum Teil im Schnitt dargestellt, und

Fig. 4 ein Schema der hydraulischen Steuerung.

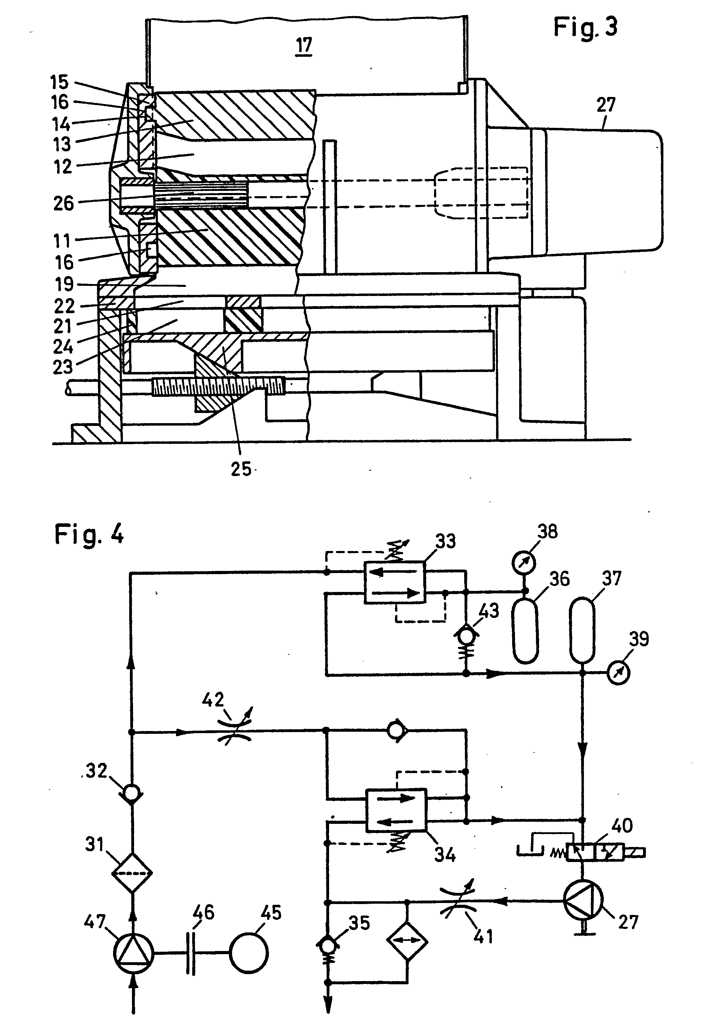

Die Pressvorrichtung 1 umfasst ein kreiszylindrisches Pumpengehäuse 10 mit einem exzentrisch angeordneten Drehkolben 11. Der Drehkolben 11 weist beispielsweise sechs radiale Schlitze 12 auf der gesamten axialen Länge auf und in diese Schlitze 12 sind radialbewegliche Schieber 13 eingesetzt. Wie Fig. 3 zeigt, hat jeder Schieber 13 einen Führungsnocken 14, mit dem er in eine Führungsnut 16 einer Steuerscheibe 15 eingreift. Unter dem Drehkolben 11 ist das Gehäuse 10 wenigstens auf einem Teil seiner Länge offen. Darüber befindet sich ein Einfülltrichter 17. In diesem Einfülltrichter 17 befindet sich ein Zuführkolben 18 zur Bewegung des im Einfülltrichter 17 befindlichen Materials gegen den Drehkolben 11 hin.

Unterhalb des Drehkolbens 11 besitzt das Gehäuse 10 eine Abgabeöffnung 19, die mit einer Kompressionskammer 20 den Abgabekanal bildet. Die Kompressionskammer 20 öffnet sich über einen Füllschlitz 21 in einer Füllplatte 22 zur Formausnehmung 23 in der hin- und herbeweglichen Formplatte 24 hin, die auf einer Druckplatte 25 aufliegt. Über die Rotorwelle 26 ist der Drehkolben 11 mit einem hydraulischen Antriebsmotor 27 verbunden.

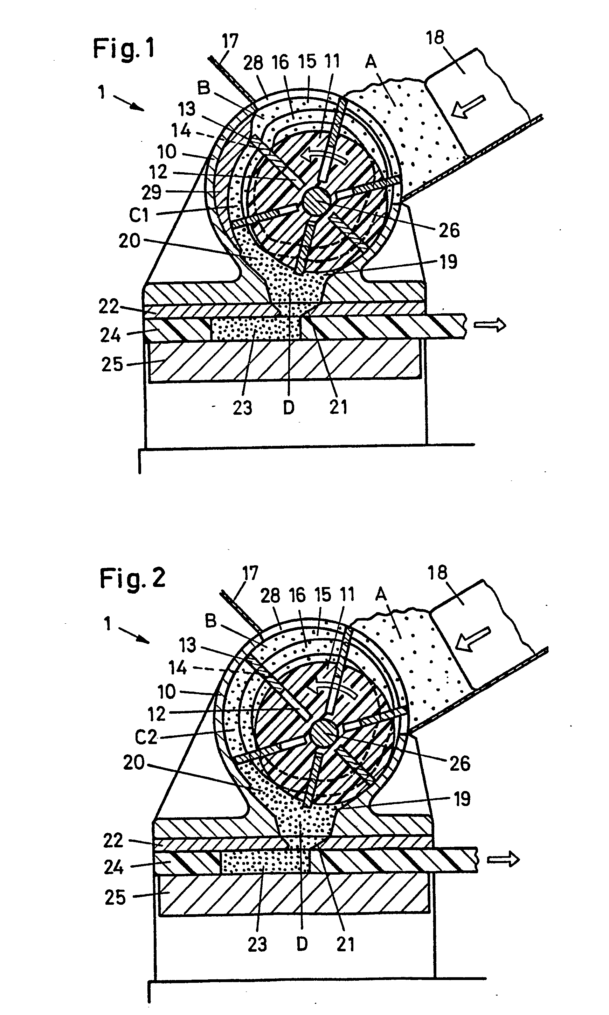

In Fig. 1 ist an der Innenwand des Gehäuses 10 zwischen der Eingabeöffnung 28 und der Abgabeöffnung 19 ein Segmenteinsatz 29 eingesetzt, mit dem der Raum zwischen der Gehäusewand und dem Körper des Drehkolbens 11 verkleinert wird. Dementsprechend muss auch die Führungsnut 16 in der Steuerscheibe 15 in den beiden Beispielen nach Fig. 1 und Fig. 2 unterschiedlich sein, derart, dass die radialen äussersten Flächen der Schieber 13 auf der Fläche des Segmenteinsatzes 29 oder auf der Innenseite des Gehäuses 10 gleiten, um das Material zwischen den Schiebern zu fördern.

Das Material an der Stelle A im Einfülltrichter 17 ist lose eingefüllt und wird durch den Zuführkolben 18 leicht vorgepresst und in diesem vorgepressten Zustand an der Stelle B in die Pressvorrichtung 1 hineingestossen. An der Stelle C1 in Fig. 1 oder C2 in Fig. 2 wird das Material vorkomprimiert, so dass die Luft entweichen kann. Aus der Zeichnung ist deutlich ersichtlich, dass das Material in Fig. 1 stärker komprimiert ist als in Fig. 2.

In diesem vorkomprimierten Zustand gelangt das Material in die Kompressionskammer 20, wo es entsprechend dem Drehmoment des Antriebsmotors 27 komprimiert wird. Das bei der Stelle D komprimierte Material gelangt dann durch den Füllschlitz 21 in die Formausnehmung 23, wo praktisch derselbe Druck herrscht wie bei D.

Damit wird erreicht, dass das Material nicht wie bisher unter einem steigenden Druck in die Form gepresst wird, sondern unter einem hydraulisch festgelegten Druck steht und auch beim Hineinfliessen in die Formausnehmung 23 auf denselben Druck gepresst wird. Das Gas hat dadurch genügend Zeit, aus dem Material zu entweichen, so dass praktisch gasfreies Material eingefüllt werden und eine Umschichtung erfolgen kann. Auch wird das Material in keiner Weise zerrissen, wie dies vordem mit der Ramm und dem Zuführschlitz in einer anderen Richtung als der Richtung des Druckvektors möglich war.

Durch Wahl der Dicke des Segmenteinsatzes 29 einerseits und des hydraulischen Druckes, der auf den Antriebsmotor 27 einwirkt, kann das Material unterschiedlich stark gepresst werden, wodurch mit derselben Portioniermaschine verschiedene Nahrungsmittel abgegeben werden können, wie gemahlenes Fleisch für Hamburger mit dem Segmenteinsatz 29, oder Teigwaren, Fleischklösse, geschnetzeltes Fleisch oder Gulasch ohne den Segmenteinsatz 29.

Eine beispielsweise druckabhängige hydraulische Steuerung für zwei unterschiedliche Kompressionsdrücke in der Kompressionskammer 19 ist in Fig. 4 dargestellt.

Mit einem elektrischen Motor 45 einer Kupplung 46 und einer Axialkolben-Verstellpumpe 47 wird ein hydraulisches Druckmittel, z.B. Öl, komprimiert. Dieses komprimierte Öl wird über ein Druckfilter 31 und ein nachgeschaltetes Rückkschlagventil 32 einem Druckreduzierventil 33 zugeführt, das zwischen beispielsweise 3,5 bis 70 bar eingestellt werden kann. Mit niedrigem Druck wird ein Niederdruckspeicher 36 und mit hohem Druck über ein Rückschlagventil 43 ein Hochdruckspeicher 37 gespeist. Die Druckkontrolle erfolgt mittels Manometern 38, 39.

Über ein Drosselventil 42 und ein weiteres Druckreduzierventil 34 wird der Antriebsmotor 45 angesteuert. Am Steuereingang befindet sich ein Sicherheitsschalter 40, der den Zutritt des Öls zum Antriebsmotor bei Stromausfall verschliesst. Der Ausgang aus dem Antriebsmotor 45 ist über ein Druckreduzierventil 41 und ein parallel zu einem Öldruckfilter geschaltetes Rückschlagventil 35 mit dem Ölreservoir (nicht dargestellt) verbunden.

Selbstverständlich wären auch andere Steuerungen für die Erzeugung eines bestimmten Druckes, z.B. ein mechanisches Mittel bei dauernd sich drehenden Motoren, wie eine Friktionskupplung, denkbar, nur wäre hier mit einer hohen Verlustwärme zu rechnen.

Mit dieser Portioniermaschine kann praktisch jedes beliebige Volumen verarbeitet werden und bei einer gegebenen Formausnehmung wird dauernd Material mit gegebenem und gleichbleibendem Druck portioniert und eingefüllt.

**Patentansprüche**

1. Portioniermaschine zum Füllen eines Formhohlraumes mit einem verformbaren Nahrungsmittel, mit einem Behälter (17) für die Aufnahme eines Vorrates des Materials, einem Abgabekanal (19, 20) zur Zuführung des Materials zur Einfüllstelle (23) und mit einer zwischen dem Behälter und dem Abgabekanal befindlichen Pressvorrichtung (1), dadurch gekennzeichnet, dass die Pressvorrichtung (1) ein in einem wenigstens angenähert kreiszylindrischen Gehäuse (10) exzentrisch angeordneter Drehkolben (11) mit mehreren radialverschieblich gehalterten plattenförmigen Schiebern (13) und einer ortsfesten Steuerscheibe (15) zur Steuerung der radialen Lage der Schieber (13) in Abhängigkeit von der Winkellage des Drehkolbens (11) ist, und dass der Abgabekanal (19, 20) als Kompressionskammer (20) ausgebildet ist, ferner gekennzeichnet durch eine Steuerung für den Antrieb (27) des Drehkolbens (11), derart, dass der Drehkolben (11) in Abhängigkeit des Druckes im Material in der Kompressionskammer (20) rotiert bzw. stillgesetzt wird.

2. Maschine nach Patentanspruch 1, dadurch gekennzeichnet, dass die Steuerscheibe (15) eine Führungsnut (16) für Führungszapfen (14) der Schieber (13) aufweist.

3. Maschine nach Patentanspruch 2, dadurch gekennzeichnet, dass die Steuerscheibe (15) auswechselbar montiert ist.

4. Maschine nach Patentanspruch 3, gekennzeichnet durch wenigstens ein Einsatzelement (29) zur Veränderung des Abstandes zwischen dem Drehkolben (11) und der Wand des Gehäuses (10) zwecks stufenweiser Veränderung des Druckes auf das Material.

5. Maschine nach Patentanspruch 4, dadurch gekennzeichnet, dass jedem Einsatzelement (29) eine eigene Steuerscheibe (15) zugeordnet ist.

6. Maschine nach Patentanspruch 1, gekennzeichnet durch einen Hydraulikmotor (27) für den Antrieb des Drehkolbens (11) und durch eine hydraulische Steuerung zur Einstellung des höchsten Drehmomentes des Drehkolbens.

7. Maschine nach Patentanspruch 6, dadurch gekennzeichnet, dass das Steuerelement der hydraulischen Steuerung ein druckabhängiges Ventil (34) ist.

8. Verwendung der Maschine nach Patentanspruch 1 zur Herstellung von Fleischpasteten aus gemahlenem Fleisch.

**Claims**

A dosing machine for filling a mould cavity with a mouldable food stuff, having a container (17) to receive a supply of the material, a delivery passage (19, 20) to supply the material to the filling position (23) and having a pressing mechanism (1) between the container and the delivery passage, characterised in that the pressing mechanism (1) is a rotary piston (11) which is disposed eccentrically in an at least substantially circular cylindrical housing (10) and has a plurality of plate-shaped pushers (13) which are held for radial displacement and a stationary plate cam (15) to control the radial position of the pushers (13) in dependence on the angular position of the rotary piston (11), and that the delivery passage (19, 20) is constructed in the form of a compression chamber (20), further characterised by a control for the drive (27) of the rotary piston (11) such that the rotary piston (11) is rotated or stopped depending on the pressure in the material in the compression chamber (20).

2. A machine according to patent claim 1, characterised in that the plate cam (15) comprises a guide groove (16) for guide pins (14) of the pushers (13).

3. A machine according to patent claim 2, characterised in that the plate cam (15) is exchangeably mounted.

4. A machine according to patent claim 3, characterised by at least one insert element (29) to vary the spacing between the rotary piston (11) and the wall of the housing (10) for the purpose of varying stepwise the pressure on the material.

5. A machine according to patent claim 4, characterised in that associated with each insert element (29) is its own plate cam (15).

6. A machine according to patent claim 1, characterised by a hydraulic motor (27) for the drive of the rotary piston (11) and by a hydraulic control to adjust the maximum torque of the rotary piston.

7. A machine according to patent claim 6, characterised in that the control element of the hydraulic control is a pressure-dependent valve (34).

8. The use of the machine according to patent claim 1 for the production of meat pastes from minced meat.

**Revendications**

1. Machine portionneuse servant à emplir une cavité de moulage avec un produit alimentaire déformable, comprenant un récipient (17) pour recevoir une réserve de matière, un canal de délivrance (19, 20) pour acheminer la matière jusqu'à la zone d'enfournement (23), ainsi qu'un dispositif de compression (1) intercalé entre le récipient et le canal de délivrance, caractérisée par le fait que le dispositif de compression (1) consiste en un piston rotatif (11) qui est logé excentriquement dans un carter (10) de forme au moins approximativement cylindrique droite, et présente plusieurs poussoirs (13) en forme de plaques maintenus mobiles radialement, ainsi qu'un disque fixe de commande (15) pour commander la position radiale des poussoirs (13) en fonction de la position angulaire du piston rotatif (11); par le fait que le canal de délivrance (19, 20) est réalisé en tant que chambre de compression (20); et par le fait qu'elle comporte en outre une commande de l'entraînement (27) du piston rotatif (11), de telle façon que ce piston rotatif (11) soit respectivement mis en rotation ou à l'arrêt en fonction de la pression régnant dans la matière dans la chambre de compression (20).

2. Machine selon la revendication 1, caractérisée par le fait que le disque de commande (15) présente une gorge de guidage (16) pour des cames de guidage (14) des poussoirs (13).

3. Machine selon la revendication 2, caractérisée par le fait que le disque de commande (15) est monté interchangeable.

4. Machine selon la revendication 3, caractérisée par au moins un élément incorporé (29) pour faire varier la distance entre le piston rotatif (11) et la paroi du carter (10), en vue d'une variation progressive de la pression imposée à la matière.

5. Machine selon la revendication 4, caractérisée par le fait qu'un disque individuel de commande (15) est associé à chaque élément incorporé (29).

6. Machine selon la revendication 1, caractérisée par un moteur hydraulique (27) pour l'entraînement du piston rotatif (11), et par une commande hydraulique en vue du réglage du couple de rotation maximal dudit piston rotatif.

7. Machine selon la revendication 6, caractérisée par le fait que l'organe de commande de la commande hydraulique est une valve (34) dépendant de la pression.

8. Application de la machine selon la revendication 1 à la fabrication de blocs de viande moulinée.

**Fig. 1**

**Fig. 2**

**Fig. 3**

**Fig. 4**